Europäisches Patentamt

European Patent Office

Office européen des brevets

(11) Veröffentlichungsnummer: **0 306 835**

**A1**

## (12) EUROPÄISCHE PATENTANMELDUNG

(21) Anmeldenummer: 88114276.4

(22) Anmeldetag: 01.09.88

(51) Int. Cl.⁴: **B65G 19/10 , B65G 19/12 , B65G 19/22 , B65G 23/12 , B65G 23/06**

(30) Priorität: 03.09.87 DE 3729386

(43) Veröffentlichungstag der Anmeldung:
15.03.89 Patentblatt 89/11

(84) Benannte Vertragsstaaten:
DE FR IT NL

(71) Anmelder: **Gerlach, Kay, Dipl.-Ing.**
**In den Wiesen 8**
**D-2730 Zeven(DE)**

(72) Erfinder: **Gerlach, Kay, Dipl.-Ing.**
**In den Wiesen 8**
**D-2730 Zeven(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Stetigförderer, insbesondere Kratzerförderer.**

(57) Insbesondere bei Kratzerförderen (10) mit an Gurten (15) geführten Kratzern (16) tritt durch das Eigengewicht der Kratzer (16) eine zusätzliche Beanpruchung der Gurte (15) auf. Darüber hinaus reiben bei naturgemäß durchhängenden Gurten (15) die Kratzer (16) zumindest in der Mitte der Trume auf der Kratzerfläche (17). Bei der Erfindung geht es darum, diese Nachteile zu beseitigen.

Erfindungsgemäß wird vorgeschlagen, die Kratzer (16) wenigstens an einem Trum derart zu führen, daß die Kratzer (16) mit ihrem Eigengewicht die Gurte (15) nicht belasten und einen geringen Abstand von der Kratzerfläche (17) aufweisten.

Der Kratzerförderer (10) eignet sich besonders zum Transport stark abrasiver Güter, beispielsweise bei der Verwendung in der Zuckerrüben- bzw. Kartoffelverarbeitung.

Fig. 5

EP 0 306 835 A1

## Stetigförderer, insbesondere Kratzerförderer

Die Erfindung betrifft einen Stetigförderer, insbesondere einen Kratzerförderer, gemäß dem Oberbegriff des Anspruches 1.

Stetigförderer der hier angesprochenen Art, also mit an (schmalen) seitlichen Gurten befestigten Förderorganen, verfügen über erheblich belastete Gurte aufgrund des Eigengewichts der Förderorgane, und zwar insbesondere dann, wenn die Förderorgane dicht hintereinanderliegend mit den Gurten verbunden bzw. lange Trume vorhanden sind. Des weiteren ist insbesondere bei Kratzerförderern es erforderlich, die Förderorgane an Leitblechen bzw. Leitböden entlangzuführen, auf denen das zu fördernde Gut aufliegt bzw. gestützt wird. Dabei läßt es sich vielfach nicht vermeiden, daß aufgrund des naturgemäß vorhandenen Durchhanges der Trume die den Leitflächen bzw. Leitböden zugerichteten Kanten der Förderorgane hierauf entlanggleiten. Das führt gerade beim Transport von stark abrasiven Gütern, beispielsweise bei der Verarbeitung von Erdfrüchten (Zuckerrüben, Kartoffeln etc.) zu einem unvermeidbaren Verschleiß der Leitbleche bzw. Leitböden. Diese müssen daher von Zeit zu Zeit ausgewechselt bzw. repariert werden, was sehr arbeitsaufwendig sowie kostenintensiv ist und zu erheblichen Ausfallzeiten des Kratzerförderers führt.

Der Erfindung liegt daher die Aufgabe zugrunde, einen Stetigförderer, und zwar insbesondere einen Kratzerförderer zu schaffen, bei dem die Belastung der Gurte verringert wird und der weitestgehend verschleißunanfällig ist.

Zur Lösung dieser Aufgabe ist ein Stetigförderer der eingangs genannten Art durch die kennzeichnenden Merkmale des Anspruchs 1 weitergebildet. Durch die Führungen der Förderorgane längs wenigstens eines Trums der Gurte wird erreicht, daß sich die Förderorgane längs des Trums am Traggerüst des Stetigförderers abstützen. Dadurch werden die Gurte insofern entlastet, als sie das Eigengewicht der Förderorgane nicht aufzunehmen haben. Die Gurte dienen damit als reine Zugorgane, in denen sie lediglich in Gurtrichtung die Antriebskräfte des Stetigförderers zu übertragen haben.

Zweckmäßigerweise sind die Führungen der Förderorgane als außen neben jedem Gurt angeordnete Laufschienen ausgebildet. Verbunden sind die Laufschienen dabei mit dem Traggerüst des Stetigförderers. Auf diese Weise ist die Abstützung einfach herzustellen und durch die Anordnung am Traggerüst außen neben den Gurten leicht zugänglich, weil sie somit neben den Förderorganen außerhalb des Einflußbereichs derselben sich befinden.

Nach einem weiteren Vorschlag der Erfindung sind die Laufschienen mit einem Belag aus einem verschleißfesten Material, insbesondere Kunststoff, versehen. Dadurch wird sichergestellt, daß die Laufschienen selbst beim Transport von stark schleißendem Material auf dem Stetigförderer über eine lange Lebensdauer verfügen. Zweckmäßigerweise verfügt der Belag über eine ausreichende Dicke, um bei einem nicht ganz auszuschließenden Verschleiß eine lange Stanzzeit zu gewährleisten. Weiterhin ist das Material für die Beläge der Laufschienen so ausgewählt, daß es einen geringen Reibwiderstand hat, also über gute Notlaufeigenschaften verfügt.

Die Abstützung der Förderorgane auf den Laufschienen erfolgt durch Gleitschuhe, die an den Befestigungsorganen für die Förderorgane an den Gurten angeordnet sind, und zwar vorzugsweise verschraubt. Das Material der Gleitschuhe ist dabei derart gewählt, daß diese im Vergleich zu den Belägen auf den Laufschienen eine geringe Verschließfestigkeit aufweisen. Dadurch soll gewährleistet werden, daß - wenn überhaupt - ein gezielter Verschleiß der erfindungsgemäßen Führung an den Gleitschuhen auftritt, die aufgrund ihrer lösbaren Verschraubung an den Förderorganen leicht und kostengünstig auswechselbar sind.

Nach einem weiteren Vorschlag der Erfindung ist zur Führung des Fördergurtes im Bereich der Umlenkorgane, nämlich jeweils zwischen zwei gegenüberliegenden Umlenkrädern eines Umlenkorgans ein Leitblech für die Förderorgane angeordnet. Das Leitblech ist dabei den zur mittigen Drehachse der Umlenkräder gerichteten Enden bzw. Kanten der Förderorgane zugeordnet, so daß an dieser Seite eine Führung des Fördergurtes erfolgt. Der Durchmesser der gewölbt ausgebildeten Leitbleche ist zweckmäßigerweise so gewählt, daß dieser etwas kleiner als die Umlenkbahn der unteren Kanten der Förderorgane im Bereich der Umlenkräder ist, damit kein verschließfördernder Kontakt zwischen den Unterkanten der Förderorgane einerseits und der denselben zugerichteten Fläche des Leitbleches andererseits erfolgt.

Bei einer bevorzugten Ausführungsform der Erfindung ist das Leitblech als geschlossener Zylinder ausgebildet, der zwischen den Umlenkrädern mindestens eines Umlenkorgans befestigt ist. Hierbei dreht sich das zylindrische Leitblech zusammen mit den Umlenkrädern und den daran umgelenkten Förderorganen mit, so daß zwischen den Förderorganen und den ihren zugerichteten Bereichen des zylindrischen Leitbleches keinerlei Relativbewegungen stattfinden. Ein Verschleiß des Leitbleches durch die Förderorgane wird hierdurch selbst beim Transport stark abrasiver Stoffe wie Zuckerrüben, Kartoffeln od. dgl. zuverlässig vermieden.

Nach einem weiteren Vorschlag der Erfindung ist vorgesehen, zumindest den angetriebenen Umlenkrädern Übertragungsorgane zur Erhöhung des von den Umlenkrädern auf die Gurte zu übertragenden Antriebsmomentes zuzuordnen. Dadurch wird sichergestellt, daß trotz der erfindungsgemäßen Verwendung (glatter) Gurte ein ausreichendes Antriebsmoment von den Umlenkrädern auf dieselben übertragen werden kann, obwohl im Gegensatz zu den üblicherweise als Zugorgane verwendeten Ketten am erfindungsgemäßen Stetigförderer kein Formschluß zwischen den Umlenkrädern und den Zugorganen mehr vorhanden ist.

Die Übertragungsorgane können sowohl durch Formschluß als auch durch Reibschluß das auf die Gurte zu übertragende Antriebsmoment erhöhen. Zur reibschlüssigen Erhöhung des zu übertragenden Antriebsmoments dienen erfindungsgemäß außen am Umfang der Umlenkräder angeordnete Andruckräder, die die Gurte - mittelbar oder unmittelbar - gegen die Auflagefläche der Umlenkräder drücken. Durch Verwendung elastischer Materialien für die Mantelfläche der Andruckräder wird sichergestellt, daß diese auch unempfindlich gegen abrasive Materialien, also verschleißunempfindlich sind. Als alternatives Übertragungsorgan sieht die Erfindung die Anordnung vn formschlüssig arbeitenden Mitnehmern im Inneren der Umlenkräder vor. Die Mitnehmer greifen seitlich neben den Bändern hinter die Förderorgane, wodurch diese im Bereich der angetriebenen Umlenkräder unter Anlage an den Mitnehmern weiterbewegt werden. Bei einer bevorzugten Ausführungsform der Erfindung sind die Mitnehmer in Richtung senkrecht zur Mantelfläche der Umlenkräder federvorgespannt verschwenkbar für den Fall, daß ein Mitnehmer unter einen Gurt oder ein Förderorgan gelangen sollte. Beschädigungen des Förderers sind dadurch ausgeschlossen.

Schließlich schlägt die Erfindung noch vor, die Laufflächen der Gurte auf den (angetriebenen) Umlenkrädern mit einem lösbaren Reibbelag zu versehen. Dieser läßt sich im Verschleißfalle separat austauschen, ohne daß dazu das entsprechende Umlenkrad komplett ausgewechselt werden muß. Zweckmäßigerweise setzt sich zu diesem Zweck jeder der lösbaren Reibbeläge aus mehreren Ringsegmenten zusammen. Es ist dadurch nicht nur eine einfache Lagerhaltung der Reibbeläge gewährleistet, vielmehr wird die Montage und die Handhabung derselben vereinfacht.

Weitere erfindungsgemäße Merkmale sind den übrigen Unteransprüchen zu entnehmen.

Ausführungsbeispiele der Erfindung werden nachfolgend anhand der Zeichnung näher erläutert.

Es zeigen:

Fig. 1 eine Gesamtseitenansicht eines Kratzerförderers,

Fig. 2 einen Querschnitt II-II durch den Kratzerförderer gemäß der Fig. 1,

Fig. 3 Eine Seitenansicht des Kratzerförderers im Bereich einer (angetriebenen) Umlenktrommel,

Fig. 4 einen teilweise dargestellten Querschnitt durch den Kratzerförderer gemäß der Fig. 3 längs seiner Drehachse,

Fig. 5 einen Querschnitt III-III durch den Kratzerförderer gemäß der Fig. 1,

Fig. 6 eine teilweise und vereinfacht dargestellte Seitenansicht des Kratzerförderers der Fig. 5, und

Fig. 7 einen Querschnitt gemäß der Fig. 5 durch ein alternatives Ausführungsbeispiel des Kratzerförderers.

In den Figuren ist ein als Kratzerförderer 10 ausgebildeter Stetigförderer dargestellt, wie er bei der Zuckerrübenaufbereitung Verwendung findet. Ein derartiger Kratzerförderer ist auf dem Rübenhof einer Zuckerrübenfabrik angeordnet zum Weitertransport der aus einem Blattabscheider kommenden Blätter zu einer Blattzentrifuge.

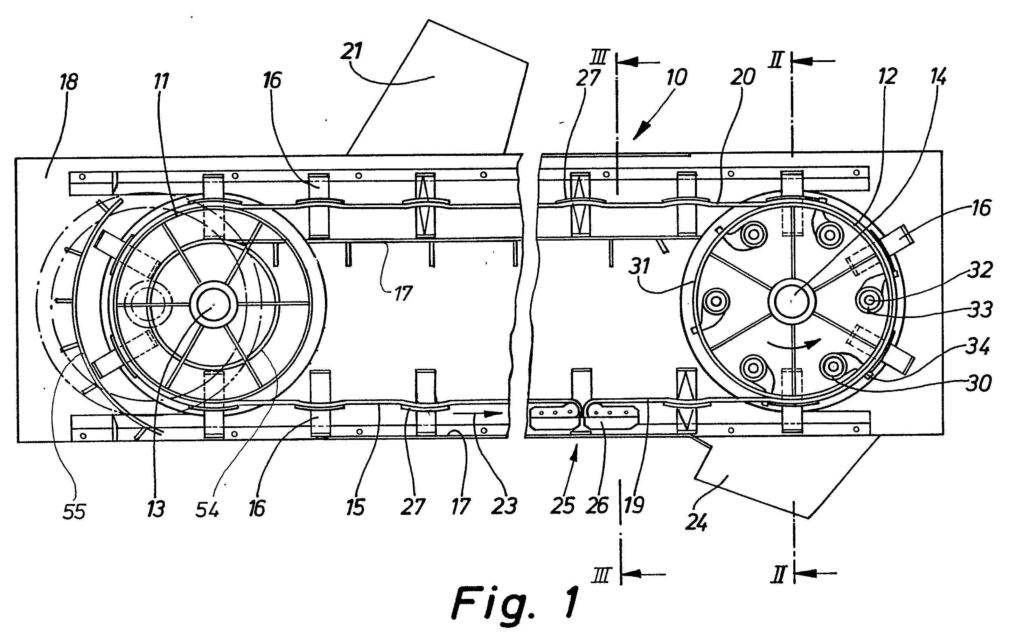

Der Fig. 1 ist der grundsätzliche Aufbau des Kratzerförderers 10 zu entnehmen, und zwar jeweils nur die Endbereiche. Demnach verfügen die einander gegenüberliegenden Enden des Kratzerförderers 10 über jeweils zwei mit Abstand voneinander angeordnete, aufrechte Umlenkräder 11 bzw. 12. Die beiden Umlenkräder 11, 12 an jedem Ende des Kratzerförderers 10 sind durch eine gemeinsame, horizontale Drehachse 13 bzw. 14 miteinander verbunden. Über eine der Drehachsen, nämlich die Drehachse 14, sind die Umlenkräder 11 und 12 an einem ende des Kratzerförderers 10 antreibbar durch einen geeigneten (nicht dargestellten) Antrieb.

Verbunden sind die jeweils einander gegenüberliegenden Umlenkräder 11 und 12 durch zwei (schmale) seitliche Gurte 15 aus einem elastischem Material, welche vorzugsweise durch eine zugfeste Einlage, beispielsweise mehrere in den Gurten 15 eingebettete Stahlseile, verstärkt sind.

Die parallel nebeneinander liegenden Gurte 15 sind durch mehrere mit Abstand voneinander angeordnete Förderorgane verbunden, nämlich Kratzer 16. Letztere transportieren das Fördergut (im vorliegenden Falle Rübenblatt) von einem Ende des Kratzerförderers 10 zum gegenüber liegenden Ende, indem die Kratzer 16 das Fördergut unter Anlage an entsprechende Kratzerflächen 17 eines den Kratzerförderer 10 umgebenden Gehäuses 18 weiterbewegen.

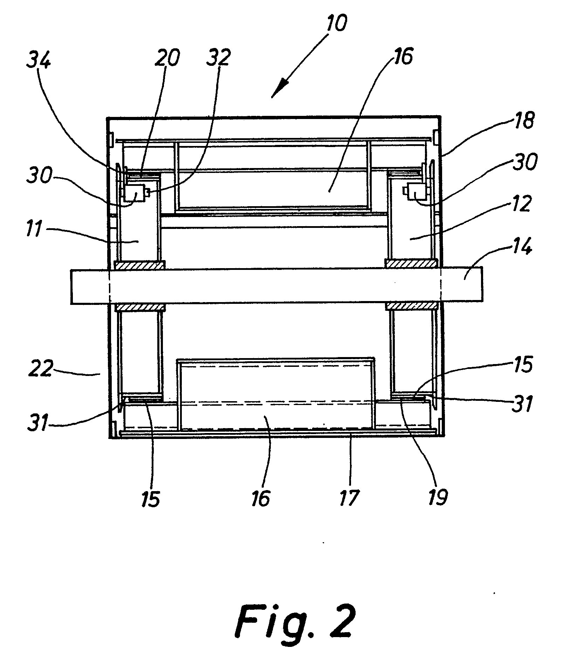

In den Fig. 1 und 2 ist darüber hinaus erkennbar, daß die Aufgabe des Fördergutes, nämlich der Zuckerrübenblätter, durch einen Aufgabestutzen 21 von der Oberseite des Gehäuses 18 her erfolgt, und zwar auf das Obertrum 20 des Kratzerförderers 10. Entlang der oberen Kratzerfläche 17 werden die auf das Obertrum 20 aufgegebenen Rübenblätter an den (links in Fig. 1) dargestellten Umlenkrädern 11 und 12 umgelenkt und entlang des Untertrums 19 längs (unteren) Kratzerfläche 17 weitertransportiert in Richtung des Pfeiles 23 zum gegenüberliegenden Ende des Kratzerförderers 10, wo an der Unterseite des Gehäuses 18 ein Abwurfstutzen 24 angeordnet ist, durch den die Rübenblätter den Kratzerförderer 10 wieder verlassen.

Die Gurte 15 bestehen aus einzelnen Gurtabschnitten, die an einer Verbindungsstelle 25 durch eine Gurtverbindung 26, wie sie beispielsweise aus dem deutschen Patent 29 39 424 bekannt ist, endlos gemacht sind. Im vorliegenden Ausführungsbeispiel ist der Gurtverbindung 26 gleichzeitig ein Kratzer 16 zugeordnet.

Die übrigen Kratzer 16 sind lösbar mit den Gurten 15 verbunden, und zwar durch Schraubverbindungen. Zu diesem Zweck weisen die Kratzer 16 an gegenüberliegenden Seiten entsprechende Laschen 27 auf, die die Gurte 15 bereichsweise überlappen und mit einer Wölbung versehen sind, die korrespondierend zum Radius der Laufflächen der Umlenkräder 11 bzw. 12 ausgebildet ist. Dadurch ist eine sichere Umlenkung der Gurte 15 auf den Umlenkrädern 11 bzw. 12 gewährleistet, ohne daß beim Auf- bzw. Ablaufen der Gurte 15 von den Umlenkrädern 11, 12 ein Verwalken derselben und eine Verbiegung der Laschen 27 erfolgt.

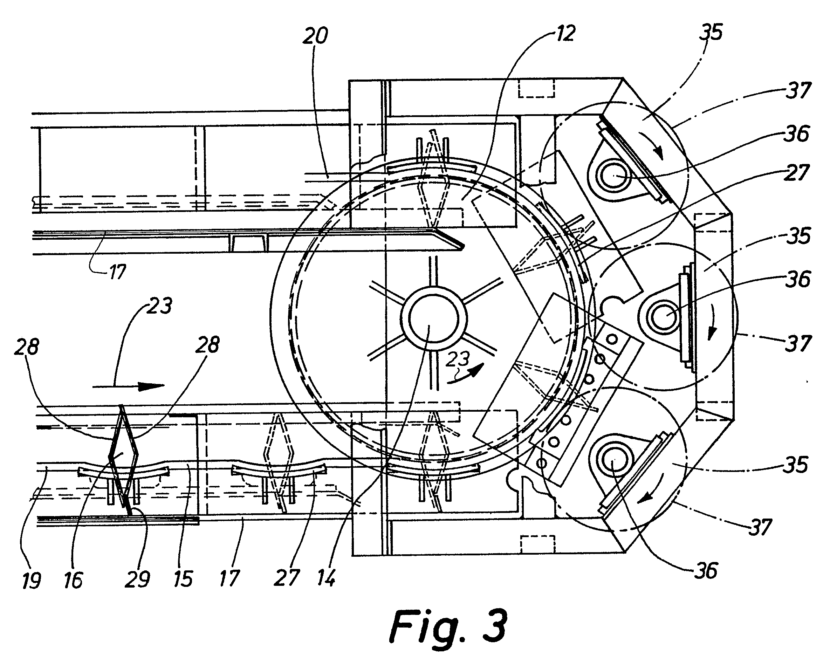

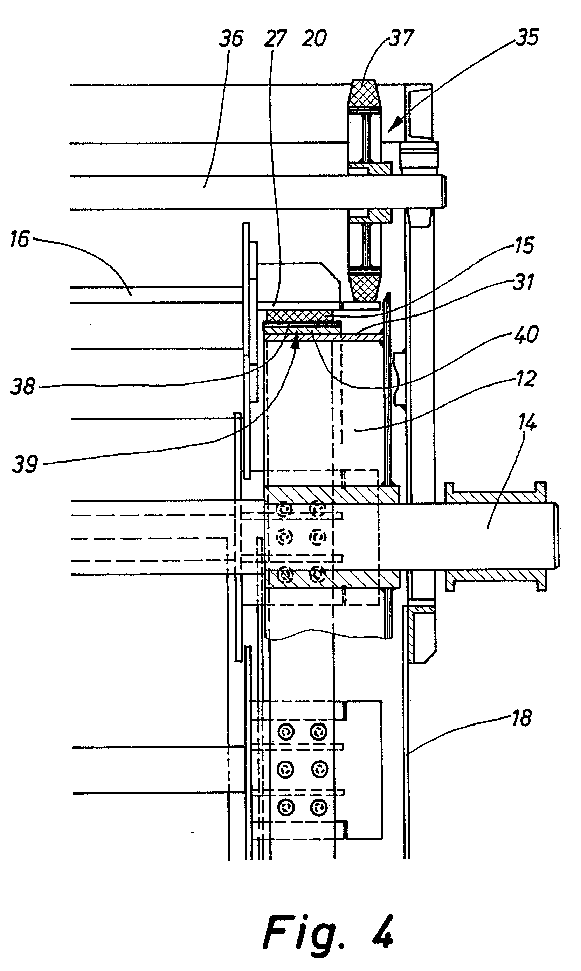

Die Kratzer 16 können im einfachsten Falle plattenförmig ausgebildet sein. Im Ausführungsbeispiel der Fig. 1 und 2 sind die Kratzer 16 jedoch im Bereich zwischen den Gurten 15 kastenförmig ausgebildet mit einem rechteckförmigen Querschnitt. Demgegenüber verfügen die Kratzer 16 der Fig. 3 und 4 über eine erfindungsgemäß besondere Ausbildung, nämlich als Hohlkörper. Zu diesem Zweck sind die Kratzer 16 in Bereichen zwischen den Gurten 15 aus zwei gegensinnig zusammengeschweißten, angewinkelten Blechen 28 zusammengestzt. Im Querschnitt verfügen die Kratzer 16 dieses Ausführungsbeispiels dadurch über eine rautenförmige Gestalt. An der zur Kratzerfläche 17 hin gerichteten Unterseite weisen die Kratzer 16 ein Kratzerblech 29 auf, welches lösbar mit einem der Bleche 28 verbunden ist. Beim Verschleiß eines Kratzerbleches 29 braucht daher der Kratzer 16 nicht vollständig ausgewechselt zu werden.

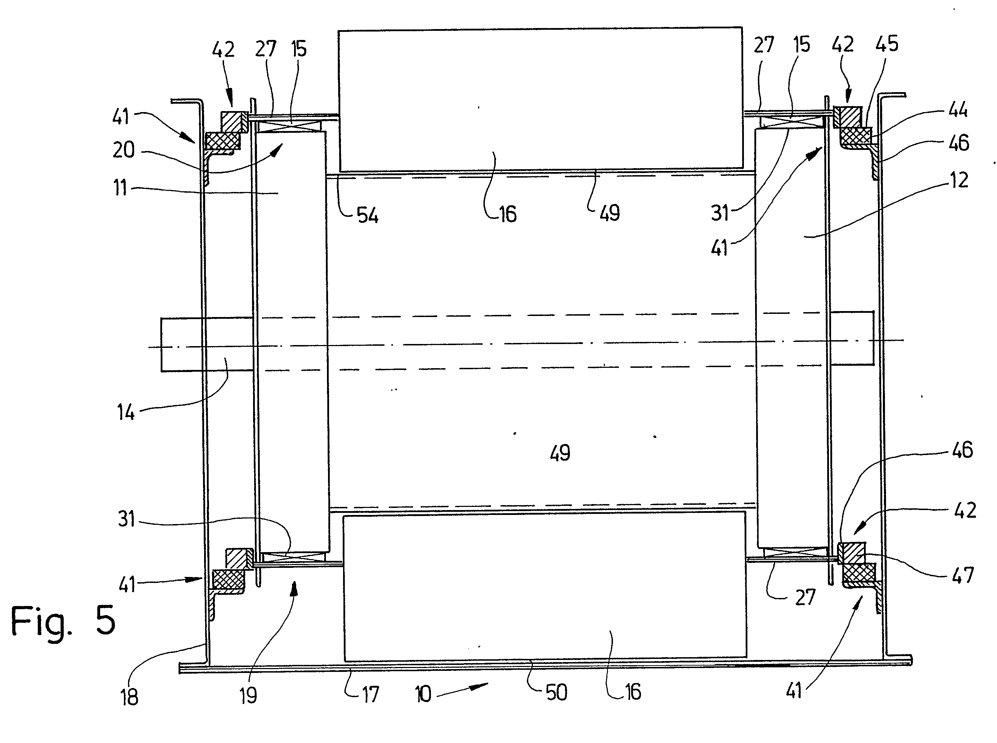

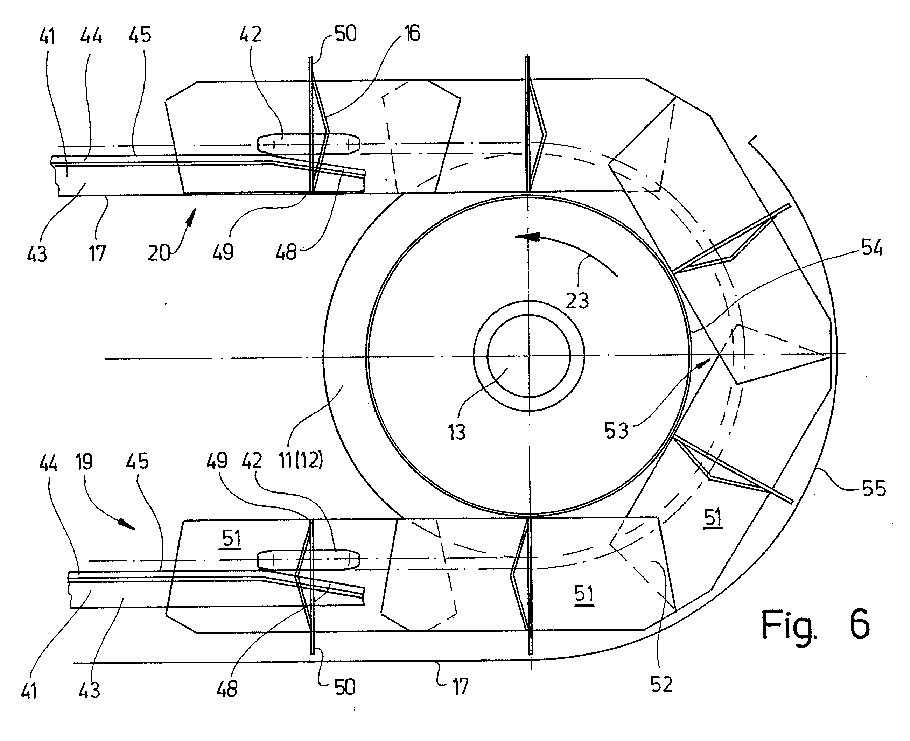

Die Fig. 5 bis zeigen die erfindungsgemäße Abstützung der an den Gurten 15 befestigten Kratzer 16. Beim Ausführungsbeispiel der Fig. 5 und 6 sind sowohl dem Untertrum 19 als auch dem Obertrum 20 jeweils Führungen für die Gurte 15 angeordnet. Die Führungen befinden sich an gegenüberliegenden Außenseiten der mit Abstand parallel zueinander verlaufenden Gurte 15.

Wie weiter die Fig. 5 und 6 zeigen, besteht jede Führung aus einer länglichen Laufschiene 41, die mit dem Traggerüst des Kratzerförderers 10, nämlich hier aufrechten Seitenwänden des Gehäuses 18, verbunden ist und aus an den Außenseiten der zur Verbindung der Kratzer 16 mit den Gurten 15 dienenden Laschen 27 angeordneten Gleitstücken 42. Durch die Anordnung der Gleitstücke 42 an den Laschen 27 wird erreicht, daß die Gurte 15 jeweils dort abgestützt werden, wo sie im durchhängenden Sinne belastet werden, nämlich an den Kratzern 16.

Die Laufschiene 41 besteht aus einem mit dem Gehäuse 18 verbundenen Befestigungswinkel 43 und einem darauf angeordneten Gleitbelag 44. Dieser ist zweckmäßigerweise mit dem Befestigungswinkel 43 verschraubt, und zwar derart, daß eine nicht gezeigte Schraube mit ihrem Schraubenkopf weitestmöglich in den relativ dicken Gleitbelag 44 versenkt ist, damit bei einer Abnutzung des Gleitbelages 44 die Schraubenköpfe nicht in die Lauffläche 45 des Gleitbelages 44 hineinragen können. Der Gleitbelag 44 jeder Laufschiene 41 kann über die Gesamtlänge der Obertrume 19 bzw. Untertrume 20 durchgehend verlaufen, aber auch aus mehreren hintereinandergesetzten Abschnitten bestehen.

Als Material für den Gleitbelag 44 kommt zweckmäßigerweise ein solches mit einer relativ hohen Abriebfestigkeit und einem geringen Reibbeiwert in Betracht. Vorzugsweise ein thermoplastischer Kunststoff.

Die Gleitstücke 42 bestehen im Ausführungsbeispiel der Fig. 5 und 6 aus einem quergerichtet mit dem außenliegenden Ende der Lasche 27 verbundenen Befestigungsflansch 46 und einem damit lösbar verbundenen, vorzugsweise verschraubten Gleitschuh 47, der Anlage auf der Lauffläche 45 des Gleitbelages 44 erhält. Die Kanten des Gleitschuhs 47 sind in Längsrichtung des Untertrums 19 bzw. des Obertrums 20 angeschrägt (Fig. 6).

Der Gleitschuh 47 besteht aus einem Material, welches im Vergleich zum Gleitbelag 44 eine geringere Abriebfestigkeit bei gleichwohl guten Notlaufeigenschaften aufweist. Dadurch tritt der Verschleiß an den relativ leicht und kostengünstig austauschbaren Gleitschuhen 47 auf.

Die Relativanordnung der Gleitstücke 42 gegenüber den Laschen 47 ist hier derart getroffen, daß sowohl am Untertrum 19 als auch am Obertrum 20 ein und dasselbe Gleitstück 42 Anlage an der jeweiligen Laufschiene 41 erhält, und zwar mit entgegengesetzten Seiten. Diese Anordnung hat den Vorteil, daß an jeder Seite des Kratzers 16 nur ein Gleitstück 42 erforderlich ist zur Abstützung des Kratzers 16 sowohl am Untertrum 19 als auch am Obertrum 20. Darüber hinaus erfolgt eine gleichmäßige Abnutzung sämtlicher Gleitschuhe 47 an den Gleitstücken 42, da diese in gleichmäßig abwechselnd auf der einen und der anderen Seite mit der entsprechenden Laufschiene 41 in Kontakt geraten.

Der Fig. 6 ist zu entnehmen, daß die zur Abstützung der Kratzer 16 dienenden Laufschienen 41 sowohl im Untertrum 19 als auch im Obertrum 20 unmittelbar vor den hier gezeigten antriebsseitigen Umlenkrädern 11 und 12 münden, und zwar mit entsprechenden Anlaufschrägen 48, die ein sicheres Auflaufen der an den Ecken abgeschrägten Gleitstücke 42 bzw. Gleitschuhe 47 auf die jeweilige Laufschiene 41 gewährleisten.

Wie der Fig. 6 weiter zu entnehmen ist, sind die Lauf schienen 41 in einer bestimmten Relativlage zu den Kratzerflächen 17 am Gehäuse 18 des Kratzerförderers 10 angeordnet, nämlich derart, daß die jeweils der Kratzerfläche 17 zugeordneten Kratzerkanten 49 bzw. 50 mit geringfügigem Abstand zu den Kratzerflächen 17 verlaufen, also keine Reibung zwischen den Kratzerkanten 49 bzw. 50 einerseits und den Kratzerflächen 17 andererseits stattfindet.

Schließlich kann weiterhin der Fig. 6 entnommen werden, daß die Kratzer 16 an gegenüberliegenden Seitenrändern mit aufrechten, in Längsrichtung des Kratzerförderers 10 verlaufenden Seitenwandungen 51 versehen sind. Der lichte Abstand der gegenüberliegenden Seitenwandungen 51 benachbarter Kratzer 16 ist dabei variiert, so daß aufgrund über den Abstand zweier Kratzer 16 hinausgehende Längen der Seitenwandungen 51 eine Überlappung 52 derselben erfolgt. Auf diese Weise wird zwischen benachbarten Kratzern 16 und der jeweiligen Kratzerfläche 17 ein quasi geschlossenes, lediglich oben offenes Förderabteil 53 gebildet zum exakten Transport des Förderguts.

Nach einem weiteren Vorschlag der Erfindung wird vorgeschlagen, zur Aufrechterhaltung des Förderabteils 53 im Bereich wenigstens einer Umlenkung der Kratzer 16 an den Umlenkrädern 11 und 12 ein Leitblech 54 anzuordnen. Letzteres ist im Ausführungsbeispiel der Fig. 5 und 6 als zylindrischer Mantel ausgebildet, der zwischen den beiden Umlenkrädern 11 und 12 befestigt ist. Der Durchmesser des Leitbleches 54 entspricht dabei etwa dem Abstand der zueinander gerichteten Kanten der Kratzer 16 zwischen dem Untertrum 19 und dem Obertrum 20. Dadurch bildet das Leitblech 54 an den zur Drehachse 13 bzw. 14 der Umlenkräder 11 und 12 gerichteten Enden der Kratzer 16 einen Boden für die Förderabteile 53.

Des weiteren ist im Bereich der Umlenkung die untere Kratzerfläche 17 durch ein radial zur Drehachse 13 bzw. 14 verlaufendes (äußeres) Führungsblech 55 verlängert, das etwa in der Ebene des Obertrums 20 endet. Dadurch sind die Förderabteile 53 im Bereich der Umlenkung zumindest an den in den Fig. 1 links dargestellten Umlenkrädern 11 bzw. 16 vollständig geschlossen gegen Herausfallen des Fördergutes.

Der Abstand des Führungsblechs 55 zu den an ihm vorbeilaufenden Unterkanten 49 der Kratzer 16 ist so gewählt, daß die Unterkante 49 mit geringfügigem Abstand an dem (stillstehenden) Führungsblech 55 vorbeilaufen. Demgegenüber können im Bereich der Umlenkräder 11 und 12 die gegenüberliegenden (zueinandergerichteten) Kratzerkanten 50 Anlage am Leitblech 54 haben, da dieses (zylindrische) Leitblech mit den Umlenkrädern 11 und 12 mitläuft, also keine Relativbewegungen zu den an den Umlenkrädern 11 und 12 umgelenkten Kratzern 16 ausführt.

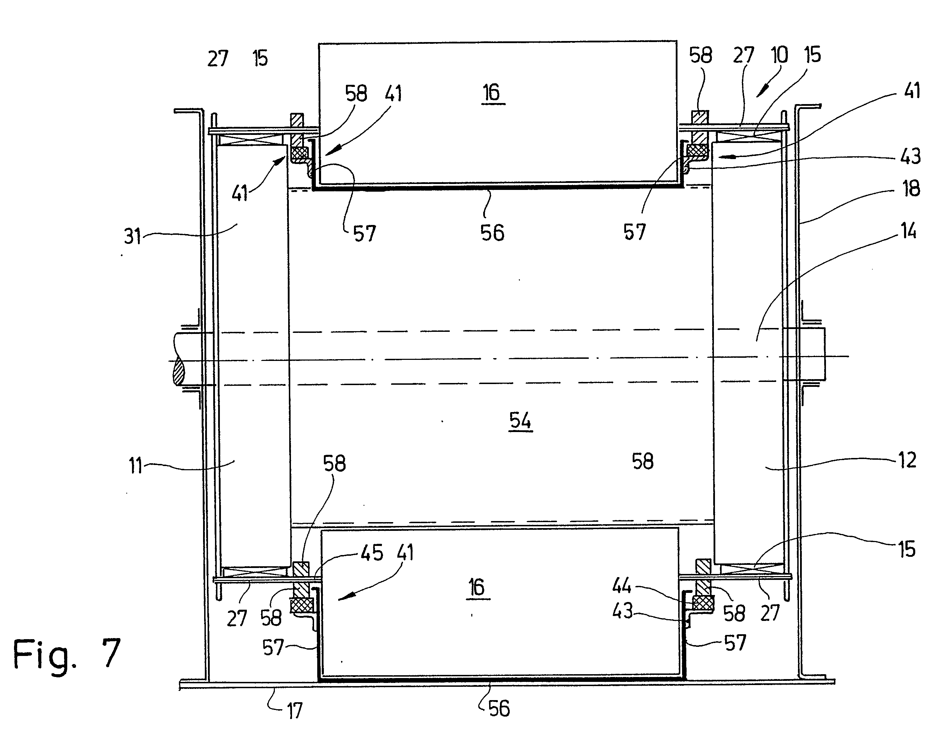

Ein alternatives Ausführungsbeispiel zur Anordnung der Laufschienen 41 am Kratzerförderer 10 zeigt die Fig. 7. Hier sind die Kratzerflächen 17 als Kratzertröge 56 ausgebildet mit neben den Seitenwandungen 51 der Kratzer 16 liegenden, aufrechten Trogseitenwänden 57. Im vorliegenden Ausführungsbeispiel ist an der Außenseite jeder dieser Trogseitenwände 57 mit dem Befestigungswinkel 53 die Lauffläche 45 der Laufschiene 41 verbunden. Die Ausbildung der Laufschienen 41 erfolgt demnach gemäß dem vorstehend beschriebenen Ausführungsbeispiel der Fig. 5 und 6. Korrespondierende Gleitstücke zu den Laufschienen 41 sind hier einstückig ausgebildet, bestehen nämlich nur aus den Gleitschuhen 58, die an jeder Lasche 27 im Bereich zwischen den daran befestigten Gurten 15 und den dazwischen angeordneten Kratzer 16 befestigt sind, und zwar ebenfalls lösbar durch Schrauben oder dergleichen. Dabei sind auch die Gleitschuhe 56 als Verschleißteile ausgebildet, bestehen also aus einem Material, daß im Vergleich zu den Gleitbelägen 44 der Laufschienen 41 über eine geringere Verschleißfestigkeit verfügt.

Im vorliegenden Ausführungsbeispiel sind gegenüberliegend auf jeder Seite der Lasche 27 zwei Gleitschuhe 58 angeordnet. Dadurch kommt im Bereich des Obertrums 20 der auf der Seite des Gurtes 15 liegende Gleitschuh 58 zur Anlage auf der Laufschiene 41, während im Bereich des Untertrums 19 der auf der dem Gurt 15 gegenüberliegenden Seite der Lasche 27 befestigte Gleitschuh 58 auf der Laufschiene 51 Anlage erhält.

Der wesentliche Vorteil der vorstehend beschriebenen Anordnung der Laufschienen 41 und der Gleitschuhe 58 besteht darin, daß der Kratzerförderer 10 kompakter ausgebildet sein kann, das heißt die aufrechten Seitenwände des Gehäuses 18 näher zusammenrücken können, wie ein Vergleich der Fig. 5 und 7 deutlich zeigt.

Nach einem weiteren wesentlichen Merkmal der Erfindung weist der Kratzerförderer 10 gemäß dem in den Fig. 1 und 2 gezeigten Ausführungsbeispiel Übertragungsorgane auf, die als Mitnehmer 30 ausgebildet sind. Letztere sind den angetriebenen Umlenkrädern 12 zugeordnet. Beim vorliegenden Ausführungsbeispiel befinden sich sechs Mitnehmer 30 radial gleichmäßig verteilt an der Innenseite der Lauffläche 31 jedes Umlenkrades 12. Dabei sind die Mitnehmer 30 auf einer mit dem Umlenkrad 12 verbundenen, parallel zur Drehachse 14 desselben verlaufenden Tragachse 32 gelargert, und zwar schwenkbar gegen eine Torsionsfeder, die hier als Gummifeder 33 ausgebildet ist. Der Drehbereich der Mitnehmer 30 ist derart gewählt, daß eine vorstehende Mitnehmernase 34 jedes Mitnehmers 30 im entlasteten Zustand der Gummifeder 33 gegenüber der Außenmantelflächer der Lauffläche 31 des Umlenkrades 12 so weit hervorragt, daß sie in seitlichen Bereichen neben den Gurten 15 hinter den Laschen 27 zur Befestigung der Kratzer 16 an den Gurten 15 zur Anlage gelangt. Auf diese Weise nehmen die Mitnehmernasen 34 jeweils zweier einander gegenüberliegender Mitnehmer 30 der Umlenkräder 12 einen Kratzer 16 samt der daran befestigten Gurte 15 während des Umlaufs auf den Umlenkrädern 12 mit, und zwar in einem Bereich von etwas 180˚ C. Entgegen der Federwirkung der Gummifedern 33 sind die Mitnehmernasen 34 der Mitnehmer 30 radial nach innen auf die Drehachse 14 der Umlenkräder 12 derart zurückschwenkbar, daß die Mitnehmernasen 34 nicht mehr gegenüber den Laufflächen 31 der Umlenkräder 12 hervorragen. Dadurch wird sicher vermieden, daß in dem Falle, in dem durch Schlupf oder Dehnung der Gurte 15 eine oder mehrere der Mitnehmernasen 34 unter eine oder mehrere der Laschen 27 der Kratzer 16 zu liegen kommt, die Mitnehmer 30 oder andere Organe des Kratzerförderers 10 beschädigt werden.

Das Ausführungsbeispiels des Kratzerförderers 10 gemäß den Fig. 3 und 4 verfügt über formschlüssige Übertragungsorgane, nämlich Andruckräder 35. Die Andruckräder 35 sind den angetriebenen Umlenkrädern 12 radial außen liegend zugeordnet. Im vorliegenden Ausführungsbeispiel sind insgesamt sechs Andruckräder 35 vorgesehen, von denen zwei Andruckräder 35 jeweils gegenüberliegend auf einer gemeinsamen, nicht angetriebenen Achse 36 gelagert sind, so daß jedem Umlenkrad 12 drei Andruckräder 35 zugeordnet sind.

Wie insbesondere der Fig. 4 zu entnehmen ist, sind die Andruckräder 35 (außen liegend) neben den Gurten 15 angeordnet. Der Abstand von den Laufflächen 31 der Umlenkräder 12 ist dabei so gewählt, daß sich der äußere, aus elastischen Material, nämlich Gummi, bestehende Mantel 37 außen auf den Laschen 27 zur Befestigung der Kratzer 16 an den Gurten 15 abstützt und dadurch die Gurte 15 unmittelbar auf die Laufflächen 31 der Umlenkräder 12 drückt, vorzugsweise unter Verformung des elastischen Mantels 37.

Die radiale Verteilung der Andruckräder 35 auf den Außenumfang der Umlenkräder 12 ist derart getroffen, daß jeweils mindestens ein Andruckrad 35 eine Lasche 27 jedes Gurtes 15 auf das entsprechende Umlenkrad 12 drückt. Je nach Abstand der Kratzer 16 an der Gurten 15 kann alternativ eine größere, aber auch eine kleinere Anzahl von Andruckrädern 35 jedem Umlenkrad 12 zugeordnet sein.

Ein weiteres, wesentliches Merkmal der Erfindung bezieht sich auf die Ausbildung der Laufflächen 31 der Umlenkräder, und zwar insbesondere der angetriebenen Umlenkräder 12. Demnach verfügen die zu den Gurten 15 gerichteten Außenflächen der Laufflächen 31 über eine Reibbelag 38. Dieser ist lösbar mit den Laufflächen 31 verbunden, nämlich verschraubt. Im Verschleißfalle können somit die Laufflächen 31 der Umlenkräder mit neuen Reibbelägen 38 versehen werden. Um dabei eine leichtere Montage des Reibelges 38 zu gewährleisten, ist dieser mehrteilig ausgebildet, besteht nämlich aus einzelnen Reibbelagsegmenten 39. Jedes dieser Reibbelagsegmente 39 besteht aus einer korrespondierend zur Lauffläche 31 des Umlenkrades 12 verlaufenden Bogenplatte 40, auf die außen die eigentliche Reibfläche, nämlich Gummi aufvulkanisiert ist.

Die Erfindung ist nicht nur auf den vorstehend beschriebenen Kratzerförderer beschränkt; vielmehr kann sie generell bei Stetigförderern vergleichbarer Art Verwendung finden.

## Ansprüche

1. Stetigförderer, insbesondere Kratzerförderer, mit zwei seitlichen endlosen bzw. endlos gemachten (schmalen) Gurten aus elastischem Werkstoff, die über mit Abstand einander gegenüberliegenden Umlenkrädern umlaufend geführt und durch quergerichtete Förderorgane miteinander verbunden sind, **dadurch gekennzeichnet,** daß die Förderorgane (Kratzer 16) im Bereich wenigstens eines Trums (Untertrum 19; Obertrum 20) der Gurte (15) geführt sind.

2. Stetigförderer nach Anspruch 1, dadurch gekennzeichnet, daß die Förderorgane (Kratzer 16) in einer Ebene des Trums bzw. der Trume der Gurte (15) bzw. parallel dazu geführt sind in einer Richtung entgegengesetzt zur Schwerkraft.

3. Stetigförderer nach Anspruch 1 oder 2, dadurch gekennzeicht, daß die Förderorgane (Kratzer 16) auf zwei in Längsrichtung wenigstens eines Trums (Untertrum 19 bzw. Obertrum 20) der Gurte (15) verlaufende Laufschienen (41) geführt sind.

4. Stetigförderer nach Anspruch 3, dadurch gekennzeichnet, daß neben jedem der beiden Gurte (15) eines oder beider Trume eine mit Abstand parallel zu dem jeweiligen Gurt (15) verlaufende Laufschiene (41) angeordnet ist.

5. Stetigförderer nach Anspruch 3 oder 4, dadurch gekennzeichnet, daß die Laufschienen (41) einen Gleitbelag (44) aus einem verschleißfesten Material mit einem geringen Reibwert, insbesondere Kunststoff, aufweisen.

6. Stetigförderer nach Anspruch 3 sowie einem oder mehreren der weiteren Ansprüche, dadurch gekennzeichnet, daß den Förderorganen (Kratzer 16) sich auf den Laufschienen (41) abstützende Gleitstücke (42) zugeordnet sind.

7. Stetigförderer nach Anspruch 6, dadurch gekennzeichnet, daß an gegenüberliegenden Befestigungsorganen (Laschen 27) zur Verbindung der Förderorgane (Kratzer 16) mit den beiden randseitigen Gurten (15) jeweils mindestens ein Gleitstück (42) angeordnet ist, insbesondere an der Außenseite des jeweiligen Gurts (15) gegenüber dem Befestigungsorgan (Lasche 27) seitlich hervorkragend.

8. Stetigförderer nach Anspruch 6 oder 7, dadurch gekennzeichnet, daß die Gleitstücke (42) bzw. mit den Laufschienen (41) in Kontakt stehende Teile derselben (Gleitschuh 47; 58) mit den Befestigungsorganen (Laschen 27) der Förderorgane (Kratzer 16) lösbar verbunden sind.

9. Stetigförderer nach Anspruch 5 sowie einem oder mehreren der weiteren Ansprüche, dadurch gekennzeichnet, daß die Gleitstücke (42) aus mindestens einem Gleitschuh (47; 58) eines Materials geringerer Abriebfestigkeit in bezug auf das Material der Gleitbeläge (44) der Laufschienen (41) gebildet sind.

10. Stetigförderer, insbesondere Kratzerförderer, mit zwei seitlich endlosen Gurten aus elastischen Werkstoff, die durch Förderorgane miteinander verbunden sind und mit zwei im Abstand voneinander angeordneten Umlenkorganen aus zwei nebeneinanderliegenden Umlenkrädern, auf denen die Gurte endlos geführt sind, vorzugsweise nach einem oder mehreren der Ansprüche 1 bis 9, dadurch gekennzeichnet, daß zwischen den Umlenkrädern (11; 12) wenigstens eines Umlenkorgans ein Leitblech (54) angeordnet ist.

11. Stetigförderer nach Anspruch 10, dadurch gekennzeichnet, daß das Leitblech (54) (zylindrisch) gewölbt ausgebildet ist und konzentrisch zur Drehachse der Umlenkräder (11; 12) verläuft, wobei der (Außen-)Durchmesser des Leitbleches (54) etwa dem Abstand der zur Drehachse der Umlenkräder (11; 12) weisenden Endbereiche (Kratzerkanten 49) der Förderorgane (Kratzer 16) längs ihrer Umlenkung auf den Umlenkrädern (11; 12) aufweist, derart, daß die Endbereiche (Kratzerkanten 49) sich auf dem Leitblech (54) abstützen bzw. mit geringfügigem Abstand zu demselben verlaufen.

12. Stetigförderer nach Anspruch 10 oder 11, dadurch gekennzeichnet, daß das Leitblech (54) als ein zwischen jeweils zwei nebeneinanderliegenden Umlenkrädern (11; 12) zentrisch befestigter (Hohl-)Zylinder ausgebildet ist.

13. Stetigförderer nach Anspruch 1 sowie einem oder mehreren der weiteren Ansprüche, dadurch gekennzeichnet, daß den angetriebenen Umlenkrädern (12) reibschlüssig und/oder formschlüssig arbeitende Übertragungsorgane (Andruckräder 35; Mitnehmer 30) zugeordnet sind zur Erhöhung des von den Umlenkrädern (12) auf die Gurte (15) zu übertragenden Antriebsmomentes.

14. Stetigförderer nach Anspruch 13, dadurch gekennzeichnet, daß die Übertragungsorgane als Andruckräder (35) zur Erhöhung des Reibschlusses zwischen den angetriebenen Umlenkrädern (12) und den Gurten (15) ausgebildet sind.

15. Stetigförderer nach Anspruch 13 oder 14, dadurch gekennzeichnet, daß mehrere, vorzugsweise sechs Andruckräder (35) radial außen liegend den Umfang der Umlenkräder (12) zugeordnet sind, vorzugsweise im Bereich der Anlage der Gurte (15) an den Umlenkrädern (12).

16. Stetigförderer nach Anspruch 13 sowie einem oder mehreren der weiteren Ansprüche, dadurch gekennzeichnet, daß die Andruckräder (35) einen geringfügigen Abstand zu den an den Umlenkrädern (12) umgelenkten Gurten (15) aufweisen, derart, daß die Andruckräder (35) die Gurte (15) in den Bereichen der zur Befestigung der Kratzer (16) dienenden Laschen (27) unter Anlage an denselben an die Umlenkräder (12) andrücken.

17. Stetigförderer nach Anspruch 15 sowie einem oder mehreren der weiteren Ansprüche, dadurch gekennzeichnet, daß die (sechs) Andruckräder (35) zu drei Gruppen paarweise mit Abstand nebeneinander liegender Andruckräder (35) derart am Umfang der Umlenkräder (12) verteilt angeordnet sind, daß stets mindestens eine Gruppe von Andruckrädern (35) Kontakt zu den Laschen (27) der Gurte (15) hat.

18. Stetigförderer nach Anspruch 13 sowie einem oder mehreren der weiteren Ansprüche, dadurch gekennzeichnet, daß die Mantelflächen der Andruckräder (35) einen Belag aus nachgiebigem Material, insbesondere Gummi, aufweisen.

19. Stetigförderer nach Anspruch 13 sowie einem oder mehreren der weiteren Ansprüche, dadurch gekennzeichnet, daß die Übertragungsorgane als Mitnehmer (30) ausgebildet sind, die formschlüssig hinter bereichsweise gegenüber den Gurten (15) vorstehenden Anschlagorganen, insbesondere Laschen (27) zur Befestigung der Kratzer (16) greifen zur Übertragung des Antriebsmoments von den Umlenkrädern (12) auf die Gurte (15).

20. Stetigförderer nach Anpruch 19 sowie einem oder mehreren der weiteren Ansprüche, dadurch gekennzeichnet, daß die Mitnehmer (30) gegenüber der (kreisrunden) Lauffläche (31) der Umlenkräder (12) innen liegend an den Umlenkrädern (12) angeordnet sind.

21. Stetigförderer nach Anspruch 20, dadurch gekennzeichnet, daß die Mitnehmer (30) federnd (schwenkbar) an den Umlenkrädern (12) gelagert sind, derart, daß an den Mitnehmern (30) angeordnete Mitnehmernasen (34) gegenüber den Laufflächen (31) der Umlenkräder (12) radial nach außen gerichtet vorstehen zur Anlage an den Laschen (27) und bei falscher Relativlage zu den Laschen (27) federnd hinter die Laufflächen (31) der Umlenkräder (12) zurückschwenkbar sind.

22. Stetigförderer nach Anspruch 1 sowie einem oder mehreren der weiteren Ansprüche, dadurch gekennzeichnet, daß zumindest die angetriebenen Umlenkräder (12) einen lösbaren Reibbelag (38) auf ihren Laufflächen (31) aufweisen, der vorzugsweise aus mehreren zusammengesetzten Reibbelagsegmenten (39) gebildet ist.

23. Stetigförderer nach Anspruch 22, dadurch gekennzeichnet, daß die Reibbelagsegmente (39) aus korrespondierend zu den (kreisförmigen) Laufflächen (31) der Umlenkräder (12) gewölbten metallischen Bogenplatten (40) bestehen, auf deren Außenseite ein Belag (38) aus einem Material mit hohem Reibkoeffizienten, vorzugsweise Gummi, aufgeklebt oder aufvulkanisiert ist.

*Fig. 1*

EP 0 306 835 A1

*Fig. 2*

**Fig. 3**

EP 0 306 835 A1

*Fig. 4*

Fig. 5

Fig. 6

Fig. 7

EP 0 306 835 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 008 732 (POHLIG-HECKEL-BLEICHERT) * Insgesamt * --- | 1-4,6,7 | B 65 G 19/10 B 65 G 19/12 B 65 G 19/22 B 65 G 23/12 B 65 G 23/06 |
| X | US-A-3 552 542 (COMBER) * Spalte 3, Zeilen 14-75; Figuren * --- | 1-4,6,7 | |
| A | FR-A-2 070 000 (AMECO) * Figuren * --- | 13,14 | |
| A | DE-B-1 056 049 (EICKHOFF) * Figuren * --- | 13,14, 15,16 | |
| A | US-A-4 671 783 (SEYMOUR) * Figuren * ----- | 19,20, 21 | |

RECHERCHIERTE
SACHGEBIETE (Int. Cl.4)

B 65 G

Der vorliegende Recherchenbericht wurde für alle Patentansprüche erstellt

| Recherchenort | Abschlußdatum der Recherche | Prüfer |
|---|---|---|
| DEN HAAG | 01-12-1988 | OSTYN T.J.M. |